# EUROPEAN PATENT APPLICATION

(11) **EP 4 603 296 A1**
(43) Date of publication of application: **20.08.2025**
(21) Application number: 25158065.0
(22) Date of filing: 14.02.2025
(51) Int. Cl.: B41M 5/00, C09D 11/322, C09D 11/54

(54) **WATER-BASED INKS FOR DIGITAL PRINTING ON EDGES**

(30) Priority: 16.02.2024 IT 202400003298
(71) Applicant: Inkgenio S.r.l., 41042 Fiorano Modenese (MO) (IT)
(72) Inventor: AMIDEI, Carlo Alberto, 41100 MODENA (IT); MARASTONI, Mirko, 41049 SASSUOLO (MODENA) (IT)
(74) Representative: Delbarba, Andrea

(57) **Abstract**

The present invention relates to a process for printing on a substrate, comprising at least one step of applying at least one primer to at least one portion of the substrate and at least one step of applying at least one ink to said at least one portion of the substrate. Furthermore, the invention relates to a substrate obtained/obtainable with said process.

## Description

The present invention relates to a process for printing on at least one substrate, preferably for printing an edge or contour.

### STATE OF THE ART

For the production of semi-finished products for the furniture industry, specifically that of the edges or contours of indoor or outdoor furniture, the polymer granules typically made of ABS, PP, PVC or PET are extruded into a thin film and usually coloured to obtain a material suitable for making the edge. After extrusion, a primer is applied by roller, generally a so-called "UV" primer, (called "white base") to improve the adhesion and wetting of the ink that will be printed, typically by rotogravure printing. Rotogravure printing requires an engraved cylinder for every colour and every design. The printed image is protected by a paint, typically a UV paint, and, for an aesthetic effect, a relief can be made that represents the veneered structure of wood. Embossing can also be performed before printing. The last step consists in cutting the perimeter band to size.

The predominant edge printing technology is rotogravure and has multiple disadvantages, for example, the need for many base colours, a stock of cylinders, as well as a limited speed. The analogue rotogravure printing method can be replaced by single-pass inkjet printing.

UV inkjet is the preferred option due to its good adhesion on the supports mentioned above. The advantages of the inkjet are manifold: no stock of cylinders, a fixed set of inks and shorter preparation times, resulting in more cost-effective production cycles. In addition, the products can be differentiated and customized. Production can run at a higher speed and the machines used have smaller overall dimensions.

In addition, both inkjet inks and traditional analogue UV inks must comply with increasingly stringent regulations regarding the environmental impact of such inks which are classified as hazardous materials, i.e. harmful, irritating, corrosive or polluting.

With a view to reducing the overall environmental impact and improving the working environment for workers, it would be preferable to replace this type of inks with more sustainable formulations, which contain pigments and raw materials suitable for the most sensitive applications in terms of safety and create added value on the final product.

However, using "non-UV" inks on digital printing can cause print adhesion problems, too long drying times, as well as incompatibility with subsequent applications.

### SUMMARY OF THE INVENTION

A first aspect of the present invention relates to a process for printing on a substrate, comprising at least one step of applying at least one primer to at least one portion of the substrate and at least one step of applying at least one ink to said at least one portion of the substrate.

Preferably, said at least one primer comprises at least one polyurethane polymer in aqueous dispersion, at least one fixative agent, at least one additive and at least one solvent.

Preferably, the ink comprises at least one dispersion comprising at least one pigment, at least one wetting agent, at least one binding agent, at least one surfactant, optionally but preferably at least one pH corrector and at least one biocide.

Preferably, the ink is applied to the at least one substrate through digital printing.

In one embodiment, the digital printing is piezoelectric inkjet printing. Preferably, the primer comprises from 10 to 30% weight/weight of the primer of the at least one polyurethane polymer, preferably from 15 to 25%, more preferably about 20% weight/weight.

Preferably, the primer comprises an agent to improve print quality in a percentage between 0.05 and 10% w/w of the primer, preferably from 0.1 to 5%, more preferably from 0.5 to 3% w/w.

Preferably, the at least one dispersion comprises at least one pigment in a concentration between 10 and 25 weight/weight of the dispersion, preferably between 15 and 25 % w/w.

The ink preferably comprises the at least one dispersion in a concentration between 5 and 35% w/w with respect to the weight of the ink, preferably between 10 and 30% w/w, more preferably between 15 and 25% w/w. Preferably, the ink comprises the at least one wetting agent in a concentration between 0.5% and 35% w/w with respect to the weight of the ink, more preferably between 10 and 25%.

Preferably, the ink comprises the at least one binding agent in a concentration between 1 and 20% w/w with respect to the weight of the ink, preferably between 5 and 15% w/w, more preferably between 8 and 12% w/w.

Preferably, the primer consists of a polyurethane polymer in aqueous dispersion, an agent to improve print quality, a solvent and a surface wetting agent.

Preferably, the primer consists of a polyurethane polymer in aqueous dispersion, an agent to improve print quality, a solvent and a rheology modifier.

Preferably, the ink consists of a dispersion comprising at least one pigment, preferably dispersed in water, a wetting agent, a binding agent, a surfactant, optionally but preferably a pH corrector and a biocide.

A second aspect of the present invention relates to a substrate obtained/obtainable with the process described above and comprising the at least one primer and the at least one ink described above.

Preferably, said substrate has:
- a paint adhesion grade classified as "no paint or colours removed" evaluated by the UNI EN ISO 2409:2013 test (4-blade hand tool and 3M adhesive tape in accordance with IEC 60454-2); and/or
   - a hardness grade classified as "B" evaluated by the UNI10782:1999 test and/or
   - a lightfastness rating classified as "greyscale rating > 5" evaluated by the UNI EN 15187:2007 test; and/or
   - a surface resistance to cold liquids grade classified as "> 4" evaluated by the PTP 53:2017 Rev. 2 method, in accordance with EN 12720; and/or
   - a surface resistance to cold liquids grade classified as ">4" evaluated by the UNI EN 12720:2013 method, in accordance with CEN/TS 16209:2011. Preferably, said at least one substrate is an edge or contour of a component or of a furnishing accessory.

### DETAILED DESCRIPTION OF THE INVENTION

A **first** aspect of the present invention relates to a printing process, preferably a process for printing a substrate or at least one portion thereof. Said process is particularly suitable for printing an edge or contour of an accessory or a furnishing component. Preferably, the process comprises at least one step of using the primer and the ink.

In one embodiment, the printing process comprises at least one step of applying at least one primer to at least one portion of the substrate and a step of applying at least one ink to said at least one portion of the substrate for forming at least one image or writing on at least one substrate.

Preferably, said at least one primer preferably comprises:
(i) at least one polyurethane polymer in aqueous dispersion
(ii) at least one fixative agent to induce aggregation of the pigments on at least one surface of the substrate with consequent improvement of print quality
(iii) at least one additive; and
(iv) at least one solvent.

In an embodiment that adds or supplements what has already been described, said at least one primer comprises from 10 to 30% weight/weight of the primer of the at least one polyurethane polymer, preferably from 15 to 25%, more preferably of about 20% weight/weight. Preferably, said at least one polyurethane polymer is a polycarbonate diol-based cationic aliphatic polyurethane.

Preferably, said at least one fixative agent is CaCl₂.

In an embodiment that adds or supplements what has already been described, said primer comprises said at least one fixative agent in a percentage between 0.05 and 10% w/w of the primer, preferably from 0.1 to 5%, more preferably from 0.5 to 3% w/w.

Preferably, said at least one fixative agent is added to the primer as a solution between distilled water (80%) and CaCl₂ (20%) chosen to obtain a better print quality.

Preferably, said at least one additive is chosen from at least one surfactant, at least one surface wetting agent and at least one rheological modifier. Preferably, the primer comprises at least one surfactant, at least one surface wetting agent and at least one rheological modifier. Preferably, said at least one solvent is an aqueous solvent, more preferably water, even more preferably distilled water.

In an embodiment that adds or supplements what has already been described, said solvent is present in a percentage between 70 and 90% w/w of the primer, preferably between 80 and 85% w/w, more preferably in a percentage to reach 100% of the sum of the percentages with components i) - iii).

In an embodiment that adds or supplements what has already been described, the primer comprises the component (i), (ii) and (iv) and at least one surface additive, preferably a silicone surfactant such as BYK 349. Preferably, the primer obtained has a characteristic suitable for a low viscosity rotogravure application (about 15" DIN Cup 53211 Ø 4 mm, 25°C), therefore for low discharge cylinders.

In a second embodiment, the primer may be a mixture between component (i), (ii), (iv) with the addition of (iii) at least one rheology modifier composed of an aqueous solution/suspension of non-ionic synthetic polymers with Newtonian behaviour, for example VISCOLAM PS 202 AIR (LAMBERTI spa) and/or at least one surfactant consisting of alkoxylated alcohols, such as for example DYNWET 800 (BYK Additives & Instruments).

Preferably, the primer obtained has a characteristic suitable for a high viscosity flexo application (about 55" (DIN Cup 53211 Ø 4 mm, 25°C), therefore for high discharge cylinders.

In an embodiment that adds or supplements what has already been described, the ink comprises at least one dispersion comprising at least one pigment, preferably dispersed in a solvent, at least one wetting agent, at least one binding agent, at least one surfactant, optionally but preferably at least one pH corrector and at least one biocide.

In one embodiment, the at least one pigment is chosen from cyan, magenta, yellow, white, black pigment and combinations thereof. Preferably, the at least one pigment is organic or inorganic, more preferably it is an organic pigment.

Preferably, the at least one pigment is chosen from azo pigments, including diazo and monoazo pigments, polycyclic pigments (for example, phthalocyanine pigments), chelates of insoluble dyes, nitropigments, nitrous pigments and quinacridones.

Preferably, said at least one cyan pigment is chosen from Pigment Blue 15:4, Pigment Blue 15:3, Pigment Blue 16, more preferably Pigment Blue 15:3.

Preferably, said at least one magenta pigment is chosen from Pigment Red 122, Pigment Red 202, Pigment Violet 19 and solid solutions thereof, more preferably a quinacridone solid solution.

Preferably, said at least one yellow pigment is chosen from Pigment Yellow 93, Pigment Yellow 138, Pigment Yellow 139, Pigment Yellow 150, Pigment Yellow 155, Pigment Yellow 185, more preferably Pigment Yellow 138.

Preferably, said at least one black pigment is PBK 7 Carbon black. Preferably, the ink comprises a mixture of pigments mentioned above. Preferably, the at least one dispersion comprises at least one pigment in a concentration between 10 and 25 weight/weight of the dispersion, preferably between 15 and 25 % w/w.

Preferably, the ink comprises the at least one dispersion in a concentration between 5 and 35% w/w with respect to the weight of the ink, preferably between 10 and 30% w/w, more preferably between 15 and 25% w/w.

In an embodiment that adds or supplements what has already been described, the ink preferably comprises the at least one wetting agent in a concentration between 0.5% and 35% w/w with respect to the weight of the ink, more preferably between 10 and 25% w/w. Preferably, said at least one wetting agent is chosen from: propylene glycol, diethylene glycol, glycerin and combinations thereof. More preferably, said at least one wetting agent is propylene glycol.

In an embodiment that adds or supplements what has already been described, the ink preferably comprises the at least one binding agent in a concentration between 1 and 20% w/w with respect to the weight of the ink, preferably between 5 and 15% w/w, more preferably between 8 and 12% w/w. Preferably, said at least one binding agent is a polyurethane or acrylic polymer in aqueous dispersion chosen from: ESAJET 4518 from LAMBERTI spa and 2019NK-004 from BASF. More preferably, said at least one binding agent is ESAJET 4518.

In an embodiment that adds or supplements what has already been described, the ink preferably comprises the at least one surfactant in a concentration between 0.1% and 5% w/w, preferably between 0.5 and 3% w/w, more preferably between 0.8 and 1.2% w/w. Preferably, said at least one surfactant is a gemini surfactant chosen from: 2,4,7,9-Tetramethyl-5-decyne-4,7-diol ethoxylate (SURFYNOL 465 from EVONIK) 2,4,7,9-Tetramethyl-5-decyne-4,7-diol (SURFYNOL 104PG from EVONIK).

In an embodiment that adds or supplements what has already been described, the ink comprises the at least one pH corrector preferably in a concentration between 0.1% and 5% w/w, preferably between 0.5 and 3% w/w, more preferably between 0.8 and 1.2% w/w.

Preferably, said at least one pH corrector is chosen from: 2-Dimethylaminoethanol (DMEA, CAS no.: 108-01-0) or triethanolamine (CAS no.: 102-71-6). More preferably, said at least one pH corrector is triethanolamine (CAS no.: 102-71-6) (VISCOJET WO252 (TEA 70%) from LAMBERTI spa).

In an embodiment that adds or supplements what has already been described, the ink comprises the at least one biocide preferably in a concentration between 0.05% and 0.5% w/w. Preferably, said at least one biocide is chosen from 1,2-benzisothiazolin-3-one (BIT)(ACTICIDE BHD1 from THOR).

In an embodiment that adds or supplements what has already been described, the ink comprises a second aqueous solvent, preferably water, more preferably distilled water, in a concentration between 30 and 70% w/w with respect to the weight of the ink, more preferably between 35 and 50% w/w.

Preferably, the ink consists of a dispersion comprising at least one pigment, preferably dispersed in a solvent, a wetting agent, a binding agent, a surfactant, optionally but preferably a pH corrector and a biocide. In an embodiment that adds or supplements what has already been described, the process comprises at least one step of applying the primer described above in detail and the ink described above in detail to at least one surface of the at least one substrate.

Preferably, the process comprises at least a first step of applying the primer described above in detail and at least a second step of applying the ink described above in detail to at least one surface of the at least one substrate.

Preferably, the at least one substrate, prior to application of the primer, has been prepared or treated with techniques known to the person skilled in the art. Preferably, the at least one substrate has been prepared or treated with at least one composition to promote adhesion and/or wetting of the ink on said at least one substrate. Preferably, said composition is a primer.

In an embodiment that adds or supplements what has already been described, the process comprises at least one step of applying at least one composition suitable for promoting the adhesion and/or wetting of the ink on said at least one substrate, preferably a primer, to at least one portion of the at least one substrate.

Preferably, the process includes projecting a stream of ink drops onto at least one surface of the at least one substrate to form the desired image or writing.

Preferably, the ink is applied onto the at least one substrate by printing, preferably by digital printing.

In an embodiment that adds or supplements what has already been described, the printing is an inkjet printing, preferably chosen from thermal, acoustic and piezoelectric inkjet printing. In an alternative embodiment, the printing is an inkjet printing known to the person skilled in the art. Preferably, the digital printing is an inkjet printing is a piezoelectric inkjet printing. That is, the process includes the use of digital inkjet printers with piezoelectric printheads.

Preferably, the process includes the use of a single-pass digital printer, i.e., a printer comprising a plurality of printheads.

Said single-pass printer preferably comprises a plurality of printheads arranged to form an angle between 30 and 150° with the printing substrate, preferably an angle of about 90°.

In an embodiment that adds or supplements what has already been described, the printing process is a printing process with a printing speed between 1 and 120 meters/minute, preferably between 10 and 60 meters/minute.

Preferably, the at least one substrate is a substrate known to the person skilled in the art for printing, preferably for digital printing. Preferably said substrate is a flexible substrate, preferably a substrate which can be wound in a reel, or is a rigid substrate, more preferably in the form of a sheet.

In one embodiment, said substrate comprises or consists of a plastic material, preferably chosen from: ABS (acrylonitrile-butadiene-styrene), PVC (polyvinylchloride), PP (polypropylene), PET (polyethylene terephthalate) and combinations thereof.

Preferably, said at least one substrate is suitable to be integrated in a furnishing component, preferably in a piece of furniture or in a furnishing accessory.

In a preferred embodiment of the invention, said at least one substrate is suitable as an edge or as a contour of a component or of a furnishing accessory. In other words, the substrate obtained with the process is suitable for being cut and inserted as an edge or contour of a piece of furniture or in a component or furnishing accessory. Preferably, said component or furnishing accessory comprises or consists of a woody material, preferably it is made of wood. Preferably, said component or furnishing accessory is suitable for an indoor environment.

In an embodiment, which adds or supplements what has already been described, the at least one substrate obtained with the process described above is further processed or treated with techniques known to the person skilled in the art. Preferably, the at least one substrate is further painted with at least one UV ink or paint or with water-based ink.

The Applicant has surprisingly found that with the claimed process substrates are obtained, in particular parts of furnishings, preferably edges or contours of furnishings, with advantageous characteristics. In fact, the substrates obtained show a high quality both in aesthetic terms and in the resistance of the colours applied. The application of the primer and ink as described above guarantees good adhesion, high print quality and faithful reproduction of wood colours. In addition, the process makes it possible to reduce environmental impact by using water-based products, reducing risks for operators and improving conditions for workers.

A **second** aspect of the present invention relates to a substrate obtained/obtainable with the process described above in detail. Preferably, said substrate comprises at least a primer and/or an ink as described above in detail.

Preferably, said substrate comprises at least a primer and an ink as described above in detail.

In one embodiment, said substrate comprises or consists of a plastic material, preferably chosen from: ABS, PVC, PP, pet and combinations thereof. Preferably, said at least one substrate comprises or consists of ABS.

Preferably, said at least one substrate is suitable to be integrated in a furnishing component, preferably in a piece of furniture or in a furnishing accessory.

In a preferred embodiment of the invention, said at least one substrate is suitable as an edge or as a contour of a component or of a furnishing accessory.

Preferably, said process gives the substrate a hardness grade classified as "B" evaluated by the UNI10782:1999 test (Steadier pencil).

Preferably, said process gives the substrate a paint adhesion grade classified as "no paint or colours removed" evaluated by the UNI EN ISO 2409:2013 test (4-blade hand tool and 3M adhesive tape in accordance with IEC 60454-2).

Preferably, this process gives the substrate a lightfastness rating classified as "greyscale rating 6" evaluated by the UNI EN 15187:2007 test (Atlas C.i. 3000+ w.o. Xeno lamp).

Preferably, said process gives the substrate a surface resistance to cold liquids grade classified as "5" evaluated by the PTP 53:2017 Rev. 2 method, in accordance with EN 12720.

Preferably, said process gives the substrate a surface resistance to cold liquids grade classified as "5" evaluated by the UNI EN 12720:2013 method, in accordance with CEN/TS 16209:2011.

### EXAMPLE

### Primer

Components (i) and (iv) shown in Table 1 were mixed in a rotating blade mixer (400 rpm). Subsequently, component (ii) was added, preferably added as a solution between distilled water (80%) and CaCl2 (20%) and finally, always under stirring, components (iii) are added.

**Tab1**

| FORMULA | Primer for ROTOGRAVURE (P1) | Primer for FLEXOGRAVURE (P2) |
|---|---|---|
| ESACOTE PUC1 | 66.00% | 32.50% |
| CaCl2 | 3.00% | 1.50% |
| DISTILLED WATER | 30.50% | 57.50% |
| DYNWET 800 | 0.50% | 0.00% |
| VISCOLAM PS202 | 0.00% | 7.50% |
| BYK 349 | 0.00% | 1.00% |
| TOTAL | 100.00% | 100.00% |
| DENSITY | 1,035g/cm3 | 1,030g/cm3 |
| pH VALUE | 5.5 | 5.5 |
| VISCOSITY | 10" | 55" |
| SOLID CONTENT | 25% | 12.5% |

The following methods and tools are used to determine the properties set forth in the present description and claims.
Density: 100ml steel pycnometer
pH value: 8 Series pHmeter (XS Instruments)
Viscosity: DIN Cup 53211 Ø 4 mm, 25°C
Solid content: ORMA Thermo 60 thermal balance (105°C drying for 2 hours)

The primers obtained are coated using a bar-coater on a pretreated PVC support with a "white base" in the following ways:
PRIMER FOR ROTOGRAVURE (P1) applied with yellow bar (6 wet grams per square meter).
PRIMER FOR FLEXOGRAVURE (P2) applied with red bar (12 grams wet per square meter).

In order to obtain an optimal receptive layer for the application of digital printing and adhesion to the support, it is in fact necessary that the dry weight applied is at least 2 gr (dry) per square meter.

### Inks

Components (ii), (iii), (vi) and (vii) shown in Table 2 were mixed in a rotating blade mixer (550 rpm). Subsequently, component (i) was added preferably slowly and finally, always under stirring, components (iv) and (v) are added.

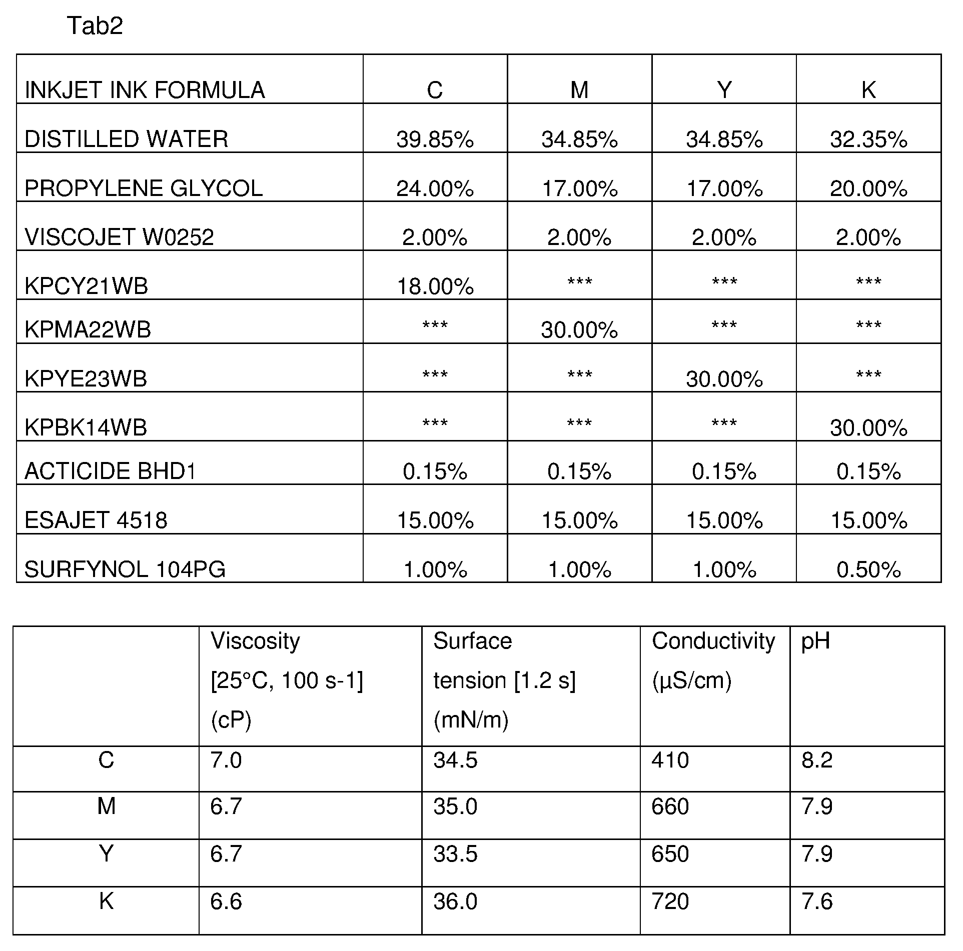

The following methods and tools are used to determine the properties set forth in the present description and claims.
pH value: 8 Series pHmeter (XS Instruments)
Viscosity: Kinexus Series Rheometer (Malvern) with flat cone geometry [25°C, 100 s-1]
Dynamic surface tension: Tensiometer: Sita proline t15 (SITA) [bubble time 1.2 s]
Conductivity: Model COND51 conductivity meter (XS Instruments)

### Printing process

In a NEOS pilot line, consisting of 1 primer application unit and a NEOS Fighter F12 single-pass printer equipped with Ricoh Gen5 printheads, the inks described above in detail were loaded. The edge to be decorated consists of ABS treated with a "white base" (i.e. painted with UV opalescent paint (in this case FI-M800 from RENNER ITALIA spa applied by roller) and already prepared by an edge manufacturer, in the form of a reel, which is unwound in the pilot line to be subjected to the application of the water-based primer as described above in detail. The primer is then dried using NIR (Near-Infrared). The printing speed is 15m/minute with a printing definition of 600x600 dpi and the ink drying system is also NIR.

The printing takes place after the creation of a colour profile suitable for the creation of a decoration such as wood and stone that will subsequently be finished with the final application of UV paint (in this case a matte paint UO-03M200 from RENNER ITALIA spa always applied by roller) by the same edge manufacturer. The printed edge is then analysed in the technical requirements according to the regulations in force in the furniture market in general.
HARDNESS TEST: Pencil method UNI10782:1999 (Steadier pencil)
Result: max hardness scale B
SQUARING TEST: UNI EN ISO 2409:2013 method (4-blade hand tool and 3M adhesive tape in accordance with IEC 60454-2)
Result: no paint and/or colours removed
LIGHTFASTNESS RATING: UNI EN 15187:2007 method
Atlas C.i.3000+ w.o. Xeno lamp
Result: greyscale rating 6
SURFACE RESISTANCE TO COLD LIQUIDS (cleaning products): PTP53:2017 Rev2 method
In accordance with EN 12720
Result: 5
SURFACE RESISTANCE TO COLD LIQUIDS: UNI EN 12720:2013 method
In accordance with CEN/TS 16209:2011
Result: 5

## Claims

1. A process for printing on a substrate comprising at least one step of applying at least one primer to at least one portion of the substrate and applying at least one ink to said at least one portion of the substrate, wherein said at least one primer comprises at least one polyurethane polymer in aqueous dispersion, at least one fixative agent to induce pigment aggregation on at least one surface of the substrate; at least one additive and at least one solvent,
wherein the ink comprises at least one dispersion comprising at least one pigment, at least one wetting agent, at least one binding agent, at least one surfactant, optionally but preferably, at least one pH corrector and at least one biocide, and
wherein ink is applied to the at least one substrate through digital printing.

2. The process according to claim 1, wherein digital printing is piezoelectric inkjet printing.

3. The process according to claim 1 or 2, wherein the at least one primer comprises the at least one polyurethane polymer in a concentration between 10 and 30 % weight/weight (w/w) of the primer, preferably 15 to 25 %, more preferably about 20 % weight/weight.

4. The process according to any one of claims 1-3, wherein the primer comprises a fixative agent in a percentage between 0.05 to 10% w/w of the primer, preferably 0.1 to 5%, more preferably 0.5 to 3% w/w.

5. The process according to any one of claims 1-4, wherein the at least one dispersion comprises at least one pigment in a concentration between 10 and 25 w/w of the dispersion, preferably between 15 and 25 % w/w.

6. The process according to claim 5, wherein the ink comprises the at least one dispersion in a concentration between 5 and 35% w/w with respect to the weight of the ink, preferably between 10 and 30% w/w, more preferably between 15 and 25% w/w.

7. The process according to any one of claims 1-6, wherein the ink comprises the at least one wetting agent in a concentration between 0.5% and 35% w/w with respect to the weight of the ink, more preferably between 10 and 25%.

8. The process according to any one of claims 1-6, wherein the ink comprises the at least one binding agent in a concentration between 1 and 20% w/w with respect to the weight of the ink, preferably between 5 and 15% w/w, more preferably between 8 and 12% w/w.

9. The process according to any one of claims 1-8, wherein the primer consists of a polyurethane polymer in aqueous dispersion, an agent to improve print quality, a solvent and a surface wetting agent.

10. The process according to any one of claims 1-8, wherein the primer consists of a polyurethane polymer in aqueous dispersion, an agent to improve print quality, a solvent and a rheology modifier.

11. The process according to any one of claims 1-4, wherein the ink consists of a dispersion comprising at least pigment, preferably dispersed in a solvent, a wetting agent, a binding agent, a surfactant, optionally but preferably a pH corrector and a biocide.

12. A substrate obtained/obtainable by the process according to any one of claims 1-11 and comprising the at least one primer and the at least one ink according to any one of claims 1-11.

13. The substrate according to claim 12, wherein said substrate has:
- a paint adhesion grade classified as "no paint or colours removed" evaluated by the UNI EN ISO 2409:2013 test (4-blade hand tool and 3M adhesive tape in accordance with IEC 60454-2); and/or
- a hardness grade classified as "B" evaluated by the UNI10782:1999 test and/or
- a lightfastness rating classified as "greyscale rating > 5" evaluated by the UNI EN 15187:2007 test; and/or
- a surface resistance to cold liquids grade classified as "> 4" evaluated by the PTP 53:2017 Rev. 2 method in accordance with EN 12720; and/or
- a surface resistance to cold liquids grade classified as ">4" evaluated by the UNI EN 12720:2013 method, in accordance with CEN/TS 16209:2011.

14. The substrate according to claim 12 or 13, wherein said at least one substrate is an edge or contour of a component or furnishing accessory.
